# FASCICULE DE BREVET EUROPEEN

(11) **EP 2 189 397 B1**
(45) Date de publication et mention de la délivrance du brevet: **18.01.2012**
(21) Numéro de dépôt: 09306118.2
(22) Date de dépôt: 20.11.2009
(51) Int. Cl.: B65G 17/00, B65G 19/02, B65G 35/06

(54) **Magasin de stockage à palettes recyclables.**
Lagerungsbehälter mit wieder verwendbaren Paletten
Storage warehouse with recyclable pallets

(30) Priorité: 25.11.2008 FR 0806602
(43) Date de publication de la demande: 26.05.2010
(73) Titulaire: Tep, Mathieu, 77186 Noisiel (FR)
(72) Inventeur: Tep, Mathieu, 77186 Noisiel (FR)
(74) Mandataire: de Saint-Palais, Arnaud Marie

(56) Documents cités:
- EP-A- 0 256 926
- EP-A- 0 462 878
- EP-A- 0 531 610
- DE-A1- 2 712 214
- FR-A- 2 626 858
- GB-A- 2 316 665
- US-A- 4 757 893
- US-A- 5 282 529
- US-A- 5 465 826
- US-A- 5 873 452
- US-A1- 2001 025 767
- US-A1- 2004 168 882

## Description

La présente invention se rapporte à un dispositif de stockage provisoire, notamment prévu pour être intégré dans une chaîne de fabrication ou de montage. Il se rapporte plus particulièrement à un magasin de stockage à palettes recyclables. Un tel magasin est notamment utile pour alimenter un îlot robotisé, là où il serait fastidieux d'utiliser des moyens humains.

De tels dispositifs doivent de préférence pouvoir remplir les conditions suivantes :
- supporter une cadence élevée ;
- être utilisés 24h/24 et 7j/7 ;
- être d'un encombrement réduit ;
- avoir une capacité pouvant atteindre 150kg ; et,
- avoir un coût faible.

Actuellement, ces dispositifs ont la forme de convoyeurs formant une boucle sans fin, comprenant un dispositif de retournement à chacune de ses extrémités. Entre les deux dispositifs de retournement, une partie droite qui est généralement une partie supérieure, sensiblement horizontale de la boucle sert au stockage, et une partie inférieure de la boucle sert au recyclage des palettes. Il existe différents types de ces convoyeurs notamment celui divulgué par FR 2 626 858 A1 et correspondant au préambule de la revendication 1, qui peuvent remplir certaines des conditions, mais il n'existe notamment pas de dispositif capable de couvrir une charge de 0 à 150 kg, pour ce type d'application.

Chaque palette peut être équipée en permanence d'un outillage, par exemple d'un outillage pour le positionnement et le maintien de pièces à usiner dans l'îlot robotisé. Cet outillage peut peser 50kg. Cet outillage doit pouvoir parcourir en permanence la boucle complète, sans diminuer les performances du dispositif, notamment en termes de cadence et de fiabilité. En particulier, le dispositif de retournement doit permettre le retournement sans à-coup d'une palette portant son équipement.

De tels à-coups pourraient notamment engendrer une détérioration du dispositif de retournement, de la palette ou de ce qu'elle porte.

Un but de l'invention est donc de proposer une solution pour permettre notamment un retournement sans à-coup d'une palette portant une charge, même relativement importante.

Selon l'invention, un dispositif de retournement d'une palette dans un magasin, autour d'un axe de retournement, est caractérisé en ce les moyens de prise rotative conçus pour entraîner la palette en rotation, sont deux disques tronconiques en vis-à-vis, centrés sur un axe de retournement.

Ces moyens de prise rotative peuvent comprendre des moyens de friction et/ou des moyens d'adhérence, les matériaux des moyens de prise rotative et des moyens complémentaires étant choisis pour offrir, en combinaison, des coefficients de frottement et/ou d'adhérence satisfaisants.

Ces moyens de friction peuvent être en un matériau élastiquement déformable. De préférence, les cônes sont disposés de sorte que chaque disque s'évase quand on s'éloigne de l'autre disque.

Avantageusement, un dispositif de retournement selon l'invention comprend des pistes latérales pour le roulement de la palette, et les moyens de prise rotative sont conçus pour maintenir la palette en appui contre les pistes.

L'invention porte aussi sur un système de magasin comportant un tel dispositif de retournement, notamment un système comprenant au moins une palette équipée des moyens complémentaires conçus pour venir en prise avec les moyens de prise rotative.

Notamment, les moyens de prise rotative étant des disques tronconiques, les moyens complémentaires peuvent avantageusement être des patins ayant une surface formant une portion de cône, complémentaire à la surface conique des disques.

Un mode de réalisation préféré de l'invention est décrit ci-après, à titre d'exemple non limitatif, en référence aux dessins annexés, dans lesquels :
- La figure 1 est une vue en perspective d'un magasin de stockage selon l'invention, équipé de palettes ;
- La figure 2 est une vue en perspective d'une extrémité du magasin de la figure 1, avec une palette en cours de retournement ;
- La figure 3 est une vue de côté de l'extrémité illustrée à la figure 2;
- La figure 4 est une vue par en-dessous et de trois-quarts d'une palette utilisée dans le magasin des figures précédentes ;
- La figure 5 est une vue similaire à celle de la figure 2, sans palette ;
- La figure 6 est une vue schématique de front, d'une extrémité du magasin de la figure 1 ;
- La figure 7 est une coupe transversale d'un tronçon courant du magasin de la figure 1, une palette y étant représentée en demi-coupe ;
- La figure 8 est une coupe transversale de la palette ; et,
- La figure 9 est une coupe transversale éclatée de trois profilés formant ensemble le tronçon courant de la figure 7.

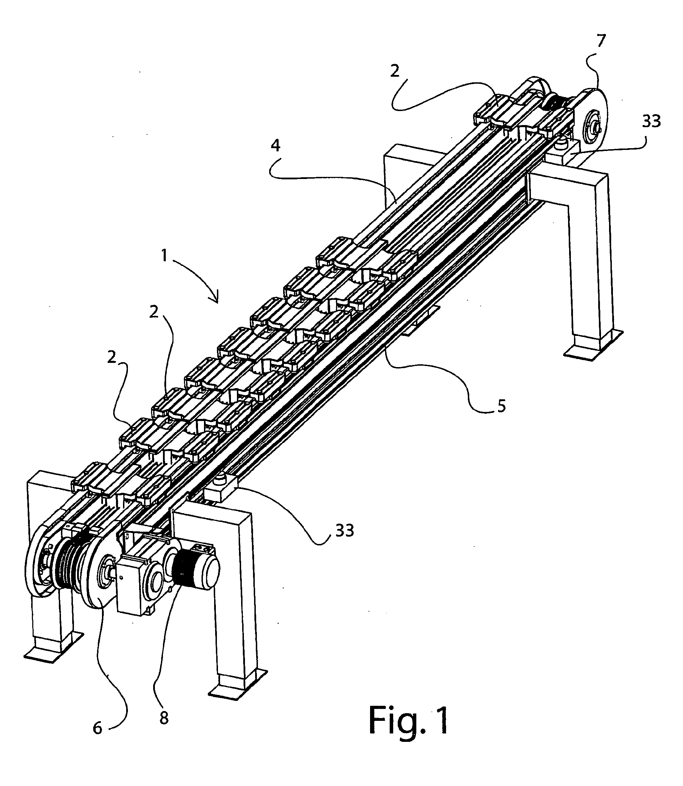

La figure 1 représente un magasin de stockage 1 prévu pour être intégré dans une chaîne de fabrication (non représentée aux figures). Le magasin 1 comprend des palettes 2 pour le support de pièces à usiner (non représentées aux figures).

Le magasin 1 forme une boucle ayant un segment supérieur 4 sensiblement horizontal et rectiligne et un segment inférieur 5 sensiblement horizontal et rectiligne, à l'aplomb du segment supérieur 4. Chacune des extrémités 6,7 du magasin 1 forme un coude semi-circulaire reliant entre elles des extrémités respectives des segments supérieur et inférieur, de sorte que la boucle est une boucle fermée. Chacune des extrémités 6,7 constitue un dispositif de retournement 6,7 pour les palettes, de sorte que les palettes qui parcourent le segment supérieur sont au-dessus du segment supérieur et que les palettes qui parcourent le segment inférieur sont en-dessous du segment inférieur.

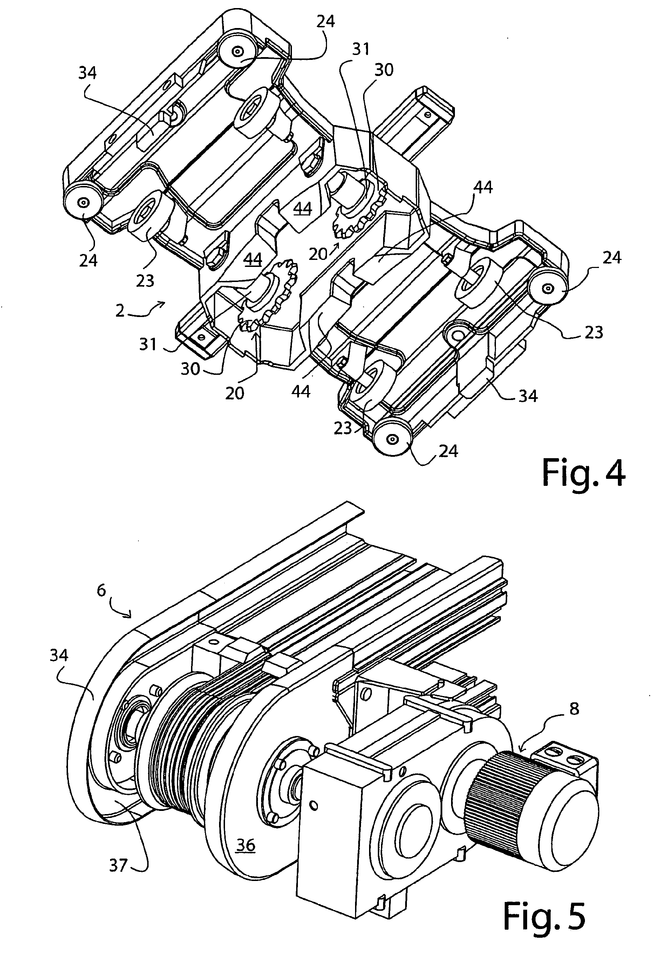

Une motorisation 8 est prévue pour le déplacement des palettes. Cette motorisation 8 est disposée au voisinage d'une première extrémité 6 parmi les extrémités 6,7 du magasin 1. Les palettes 2 sont entraînées de façon débrayable le long de la boucle. Le dispositif de débrayage sera décrit en référence à la figure 4.

Une palette 2 est illustrée plus en détail notamment aux figures 4, 7 et 8.

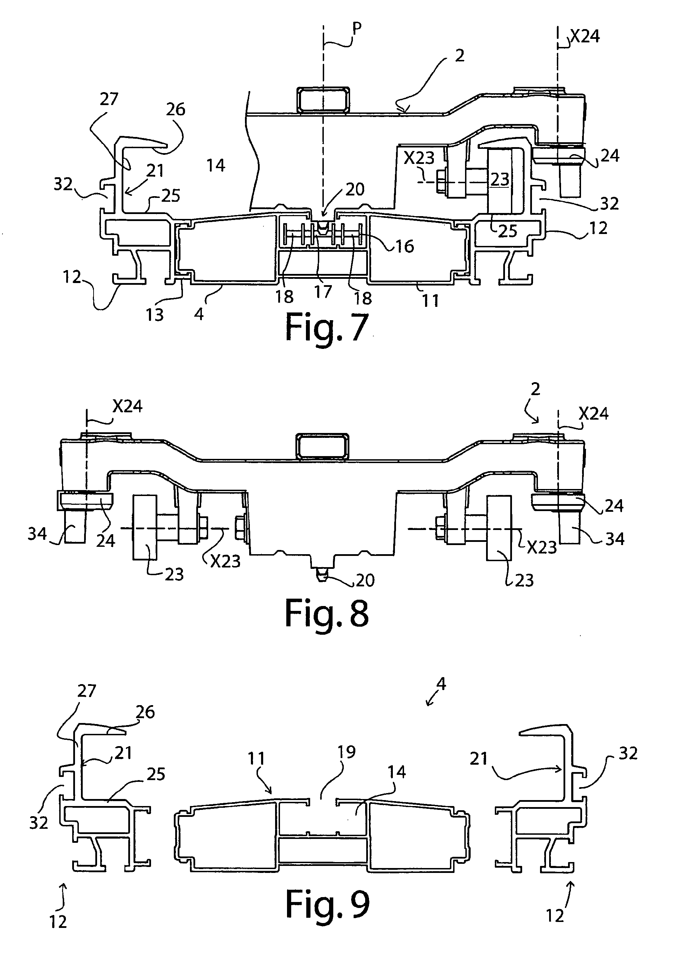

Le segment supérieur 4 est illustré plus en détail aux figures 7 et 9. Dans l'exemple décrit, le segment inférieur 5 est sensiblement identique au segment supérieur 4, sauf en ce qu'il est disposé tête bêche relativement au segment supérieur 4.

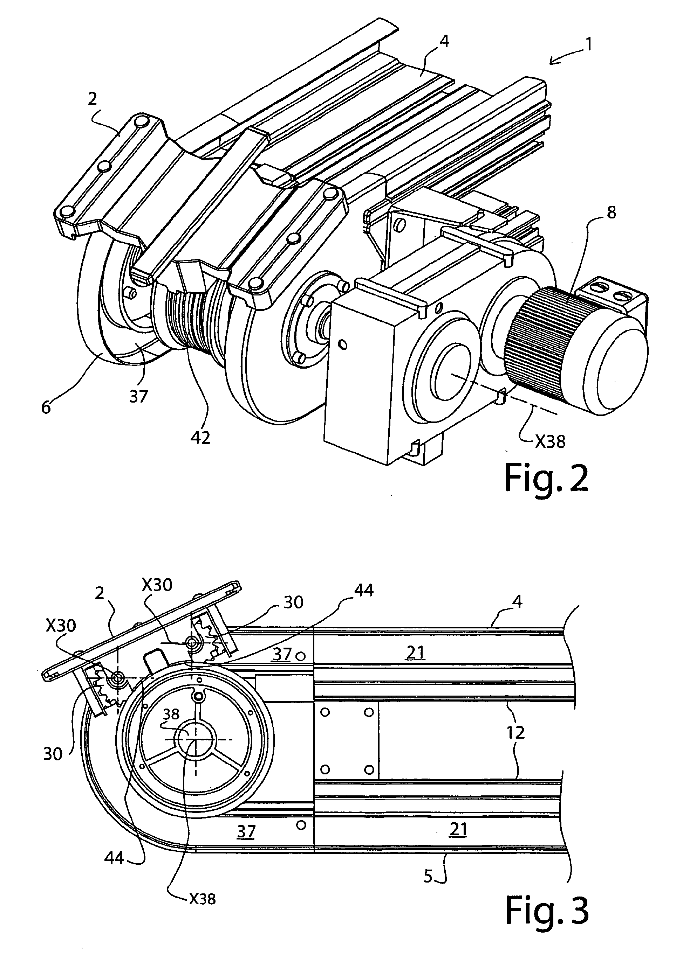

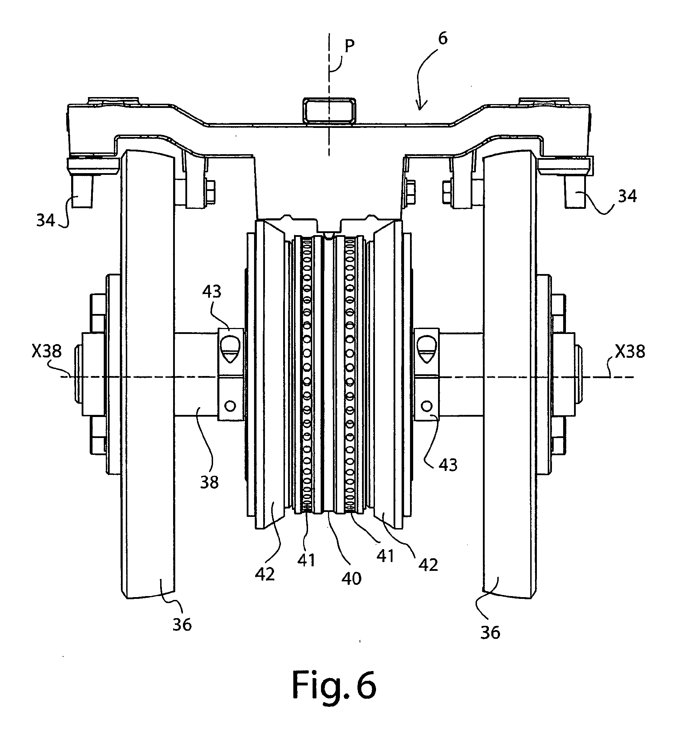

La première extrémité 6 est illustrée plus en détails aux figures 2, 3, 5 et 6. La deuxième extrémité 7 du magasin est sensiblement identique à la première extrémité 6, sauf en ce qu'elle ne comprend pas de motorisation.

On va d'abord décrire le magasin 1 dans sa partie courante c'est-à-dire le segment supérieur, notamment en référence aux figures 7 à 8.

Le magasin est sensiblement symétrique relativement à un plan longitudinal P. Le segment 4 a une section transversale sensiblement constante. La structure du segment 4 est formée de trois profilés 11,12 assemblés entre eux, dont un profilé central 11 et deux profilés latéraux 12. Les profilés 11,12 s'étendent longitudinalement le long du segment 4. Les profilés latéraux 12 sont assemblés avec le profilé central 11 de part et d'autre du profilé central 11. L'assemblage se fait par un emboîtement et coulissement longitudinal d'un profil 13 en forme de « C » porté par chaque profilé latéral, avec un profil complémentaire respectif porté par le profilé central 11. Les profilés latéraux 12 sont identiques entre eux et disposés symétriquement l'un par rapport à l'autre relativement au plan P.

Grace à ce montage, il est possible de former le magasin 1 afin d'adapter sa longueur à une utilisation spécifique, simplement en découpant les profilés 11,12 à la longueur souhaitée. Il est aussi possible de former le magasin 1 afin d'adapter sa largeur à une utilisation spécifique, simplement en choisissant un profilé central adapté, tout en utilisant un même profilé latéral.

Le profilé central 11 comprend un logement supérieur 14 pour une chaîne triple 16 formée de maillons centraux 17 et de maillons latéraux 18. La chaîne 16 est fermée sur elle-même et parcourt l'ensemble de la boucle formée par le magasin 1. La motorisation 8 est prévue pour venir en prise, au moins indirecte, avec les maillons latéraux, de sorte qu'elle entraîne la chaîne 16 en déplacement dans le logement 14. Les maillons centraux sont prévus pour venir en prise avec les palettes 2 et permettre leur déplacement dans le magasin 1.

Une ouverture longitudinale 19 est formée dans la paroi supérieure du logement 14, afin de permettre le passage de moyens 20, prévus sous chaque palette 2, pour venir en prise avec les maillons centraux 17 de la chaîne 16.

Les profilés latéraux 12 sont notamment prévus pour le guidage des palettes 2 le long du segment 4. Ainsi, chaque profilé latéral 12 comprend un profil de guidage en forme de « U » ouvert latéralement, de sorte qu'une fois monté, tel qu'illustré à la figure 7, le « U » soit ouvert en direction du plan P et en ce qu'il s'étende vers le haut relativement au profilé central 11.

Chaque palette 2 comprend quatre galets de roulement 23 et quatre galets de guidage 24 (voir en particulier la figure 4).

Chaque galet de roulement 23 est monté en rotation autour d'un axe respectif X23 horizontal et transversal. Il est prévu pour rouler à l'intérieur du U, sur son aile inférieure 25. L'aile supérieure 26 du U 21 permet d'éviter l'échappement de la palette 2 vers le haut lorsqu'elle parcourt le tronçon supérieur 4, elle permet aussi le roulement des galets 23 lorsque la palette parcourt le segment inférieur 5, équipé d'un même profilé latéral 12.

Chaque galet de guidage 24 est monté en rotation autour d'un axe respectif X24 vertical. Il est prévu pour rouler à l'extérieur du U 21 sur la base 27 du U. Les galets de guidage 24 permettent ainsi le positionnement latéral de chaque palette relativement au magasin 1.

Comme particulièrement illustré à la figure 4, les moyens de prise 20 de chaque palette 2 avec la chaîne 16 comprennent deux pignons 30, chacun monté rotatif autour d'un axe X30 horizontal respectif. Les moyens de prise 20 comprennent une chape de friction 31 exerçant des frottements sur chaque face latérale de chaque pignon 30.

La chape de friction 31permet un entraînement débrayable des palettes 2. Ainsi, notamment, si une palette 2 est bloquée dans son déplacement, par exemple par la présence d'une autre palette, le moment exercé par la chaîne sur chaque pignon devient supérieur au couple exercé par la chape de friction 31 de ce même pignon, provoquant le débrayage du pignon 30 qui tourne alors librement autour de son axe X30, entraîné par le mouvement de la chaîne, sans que la palette 2 se déplace. Ainsi, il est possible d'accumuler plusieurs palettes 2 dans une zone du magasin (voir figure 1), par exemple en attente d'usinage, puis de libérer chaque palette qui vient d'être usinée, pour son recyclage dans le magasin 1.

La chape 31 exerçant un frottement latéral, ce frottement est indépendant de la charge portée par la palette 2. Avantageusement, le pignon 30 peut être en acier et la chape de friction peut être en Ertalyte™.

Des butées escamotables 33 sont disposées le long du segment supérieur 4 (voir la figure 1). Elles sont fixées sur un profil 32 des profilés latéraux 12. Elles sont prévues pour coopérer avec des taquets 34 de chaque palette pour permettre son positionnement et son immobilisation dans le magasin. Une fois que la palette est immobilisée par une butée, ses pignons 30 sont automatiquement débrayés, comme décrit plus haut. Ainsi, le mouvement de la chaîne 16 n'est pas interrompu. De cette façon, la circulation d'une autre palette dans le magasin n'est pas non plus interrompue, sauf si elle vient buter sur une palette déjà immobilisée, ou si elle est elle-même immobilisée par une butée.

On va maintenant décrire le dispositif de retournent 6, notamment en référence aux figures 2, 3, 5 et 6.

Le dispositif de retournement 6 comprend deux flasques latéraux 36. Chaque flasque est fixé d'une part à une extrémité du segment supérieur 4 et d'autre part à une extrémité respective du segment inférieur 5. En outre, chaque flasque 36 forme une goulotte 37 qui prolonge à la fois un « U » 21 1 respectif du segment supérieur 4 et un « U » respectif du segment inférieur. Chaque goulotte comprend en outre une portion semi-circulaire qui assure un raccordement entre les « U » respectifs des segments supérieur et inférieur. Ainsi, le roulement des galets de roulement 23 est assuré tout le long de la boucle formée par le magasin, et notamment dans le dispositif de retournement 6, depuis un segment rectiligne 4,5 vers l'autre segment rectiligne 5,4.

Les flasques 36 portent ensemble un arbre 38 monté en rotation autour d'un axe X38, transversal et horizontal. L'arbre 38 est entraîné en rotation directement par le motoréducteur 8.

L'arbre 38 porte un tambour axial 40 portant deux pignons d'entraînement 41 prévus pour engrener chacun avec des maillons latéraux 18 respectifs de la chaîne triple 16. Le tambour axial 40 est en prise avec l'arbre 38, de sorte qu'ils ont le même mouvement de rotation autour de l'axe X38. Ainsi, les pignons d'entraînement 38 permettent le déplacement de la chaîne 16 dans le magasin 1 et, par conséquence, le déplacement des palettes en prise débrayable avec la chaîne 16.

Au-delà de chaque pignon d'entraînement 41, relativement au plan P, le tambour 40 porte en outre des moyens de prise rotative 42 ayant la forme d'un disque tronconique 42 allant en s'évasant à mesure où l'on s'éloigne du plan P. Dans l'exemple illustré, l'angle du cône est d'environ 45 degrés par rapport à l'axe X38. Des bagues 43 maintiennent axialement les disques 42, de façon à ce qu'ils ne puissent s'écarter l'un de l'autre.

Chaque palette 2 comprend des patins 44, ici au nombre de quatre. Les patins ont une forme conique complémentaire à celle des disques 42. Ainsi, lorsqu'une palette 2 s'engage dans le dispositif de retournement 6, les patins 44 viennent en prise avec les disques 42, de sorte que l'entraînement de la palette 2 se fait essentiellement par cette liaison entre les disques 42 et les patins 44. Cette liaison est calculée de sorte que le retournement se fasse sans glissement relatif des patins et des disques, quelle que soit la charge portée par la palette, dans un intervalle de fonctionnement donné pour le magasin 1.

Dans l'exemple illustré, les dimensions respectives des disques et des palettes tendent à soulever la palette lorsque les patins 44 viennent en prise avec les disques 42, c'est-à-dire que la mise en prise des disques avec les patins tend à déplacer radialement la palette en l'éloignant de l'axe X38. Ainsi, cela provoque un pincement radial de la palette 2 entre les disques et l'aile extérieure de la goulotte 37. En outre, la forme conique des disques 42 provoque un pincement axial, relativement à l'axe X38, des patins 44 entre les disques 42. De plus, la forme conique permet d'avoir une plus grande surface de contact entre les patins et les disques.

Dans l'exemple illustré, les disques sont en une matière élastiquement déformable. Lors de la mise en prise, les galets de roulement étant en contact avec l'aile extérieure des goulottes, l'appui des patins 44 sur les disques provoque la déformation locale et radiale, en direction de l'axe X38, des disques. De cette façon, la déformation radiale forme une légère cuvette qui participe au maintien sans glissement des patins, en même temps que l'effort élastique résultant de la même déformation.

Bien sûr, l'invention n'est pas limitée au mode de réalisation illustré aux figures et précédemment décrit.

Ainsi, un magasin selon l'invention peut être utilisé pour tout stockage temporaire, pas seulement pour l'approvisionnement d'une chaîne de fabrication ou pour des pièces à usiner.

Aussi, un dispositif de retournement selon l'invention peut comprendre des moyens de rails différents des profilés en forme de « C » décrits précédemment, de même que les segments rectilignes. D'autres moyens peuvent être prévus pour le maintien en prise de la palette avec les moyens de retournement.

La conicité des disques peut aussi être inversée, de sorte que le pincement radial est celui des patins sur les disques.

## Revendications

1. Dispositif de retournement (6) d'une palette (2) dans un magasin à palettes recyclables (1), autour d'un axe de retournement (X38), comprenant des moyens de prise rotative (42) prévus pour entraîner ladite palette (2) en rotation, **caractérisé en ce que** les moyens de prise rotative sont deux disques tronconiques (42) en vis-à-vis, centrés sur l'axe de retournement (X38).

2. Dispositif selon la revendication 1, **caractérisé en ce que** chaque disque (42) s'évase quand on s'éloigne de l'autre disque.

3. Dispositif selon la revendication 1 ou 2, **caractérisé en ce que** les disques (42) comprennent des moyens de friction.

4. Dispositif selon l'une des revendications 1 à 3, **caractérisé en ce que** les disques (42) comprennent des moyens d'adhérence.

5. Dispositif selon l'une des revendications 1 à 4, **caractérisé en ce que** les disques (42) rotatifs sont en un matériau élastiquement déformable.

6. Dispositif selon l'une des revendications 1 à 5, **caractérisé en ce qu'**il comprend des pistes latérales (37) pour le roulement de la palette (2), et **en ce que** les moyens (42) de prise rotative sont conçus pour maintenir ladite palette en appui radial contre lesdites pistes (37).

7. Système de magasin à palettes recyclables (1) **caractérisé en ce qu'**il comprend un dispositif selon l'une des revendications 1 à 6 et au moins une palette (2), ladite palette comprenant des moyens complémentaires (44) conçus pour venir en prise avec les moyens de prise rotative (42), **caractérisé en ce que** les moyens complémentaires (44) sont des patins ayant une surface formant une portion de cône, complémentaire à une surface conique des moyens de prise rotative (42).

8. Système de magasin (1) selon la revendication 7, **caractérisé en ce que** seuls les moyens de prise rotative sont prévus pour entraîner la palette à l'exclusion d'autres moyens prévus pour l'entrainement de la palette ailleurs dans le système de magasin.

## Claims

1. A device (6) for reversing a palette (2) in a recyclable palette warehouse (1), around a reversal shaft (X38), comprising rotary gripping means (42) provided to rotate said palette (2), **characterized in that** the rotary gripping means are two tapered disks (42) facing each other, centered on the reversal shaft (X38).

2. The device according to claim 1, **characterized in that** each disk (42) flares moving away from the other disk.

3. The device according to claim 1 or 2, **characterized in that** the disks (42) comprise friction means.

4. The device according to one of claims 1 to 3, **characterized in that** the disks (42) comprise adhesion means.

5. The device according to one of claims 1 to 4, **characterized in that** the rotary disks (42) are made from an elastically deformable material.

6. The device according to one of claims 1 to 5, **characterized in that** it comprises lateral tracks (37) for rolling the palette (2), and **in that** the rotary gripping means (42) are designed to keep said palette radially bearing against said tracks (37).

7. A recyclable palette warehouse system (1), **characterized in that** it comprises a device according to one of claims 1 to 6 and at least one palette (2), said palette comprising additional means (44) designed to engage with the rotary gripping means (42), **characterized in that** the additional means (44) are skates having a surface forming a cone portion, complementary to a conical surface of the rotary gripping means (42).

8. The warehouse system (1) according to claim 7, **characterized in that** only the rotary gripping means are provided to drive the palette to the exclusion of other means provided to drive the palette elsewhere in the warehouse system.

## Patentansprüche

1. Wendeeinrichtung (6) in einem Lager (1) mit wiederverwendbaren Paletten zum Wenden einer Palette (2) um eine Wendeachse (X38), wobei die Wendeeinrichtung Mittel zum rotierenden Eingreifen (42) umfasst, um die Palette (2) in Rotation zu versetzen, **dadurch gekennzeichnet, dass** die Mittel zum rotierenden Eingreifen zwei einander gegenüberliegende kegelförmige Scheiben (42) sind, die um die Wendeachse (X38) zentriert sind.

2. Einrichtung nach Anspruch 1, **dadurch gekennzeichnet, dass** jede Scheibe (42) sich mit zunehmender Entfernung von der anderen Scheibe erweitert.

3. Einrichtung nach Anspruch 1 oder 2, **dadurch gekennzeichnet, dass** die Scheiben (42) Reibmittel umfassen.

4. Einrichtung nach einem der Ansprüche 1 bis 3, **dadurch gekennzeichnet, dass** die Scheiben (42) Haftmittel umfassen.

5. Einrichtung nach einem der Ansprüche 1 bis 4, **dadurch gekennzeichnet, dass** die drehbaren Scheiben (42) aus einem elastisch verformbaren Material bestehen.

6. Einrichtung nach einem der Ansprüche 1 bis 5, **dadurch gekennzeichnet, dass** sie seitliche Bahnen (37) zum Rollen der Palette (2) umfasst und dass die Mittel (42) zum rotierenden Eingreifen derart ausgelegt sind, dass sie die Palette in radialer Anlage gegen die Bahnen (37) halten.

7. Lagerungssystem (1) mit wiederverwendbaren Paletten, **dadurch gekennzeichnet, dass** es eine Einrichtung nach einem der Ansprüche 1 bis 6 und wenigstens eine Palette (2) umfasst, wobei die Palette ergänzende Mittel (44) umfasst, die derart ausgelegt sind, dass sie mit den Mitteln zum rotierende Eingreifen (42) in Eingriff kommen, **dadurch gekennzeichnet, dass** die ergänzenden Mittel (44) Kufen mit einer Oberfläche sind, die als Teil eines Kegelstumpfes komplementär zu einer kegelförmigem Fläche der Mittel zum rotierenden Eingreifen (42) ausgebildet ist.

8. Lagerungssystem (1) nach Anspruch 7, **dadurch gekennzeichnet, dass** nur die Mittel zum rotierenden Eingreifen zum Antreiben der Palette vorgesehen sind, unter Ausschluss anderer anderswo in dem Lagerungssystem vorgesehenen Mittel zum Antreiben der Palette.
